# FASCICULE DE BREVET EUROPEEN

(11) **EP 1 877 289 B1**
(45) Date de publication et mention de la délivrance du brevet: **24.02.2010**
(21) Numéro de dépôt: 06743828.3
(22) Date de dépôt: 21.04.2006
(51) Int. Cl.: B60R 21/34, B60R 19/24, B60R 19/12

(54) **AGENCEMENT POUR LE MONTAGE D'UNE BARRE DE CHOCS DE VEHICULE AUTOMOBILE PAR L'INTERMEDIAIRE D'UN ELEMENT D'HABILLAGE AVANT**
ANORDNUNG ZUR BEFESTIGUNG EINER AUTOSTOSSFÄNGERSTANGE MITTELS EINES VORDEREN ABDECKELEMENTS
ARRANGEMENT FOR MOUNTING A MOTOR VEHICLE BUMPER BAR BY MEANS OF A FRONT COVERING ELEMENT

(30) Priorité: 29.04.2005 FR 0551122
(43) Date de publication de la demande: 16.01.2008
(73) Titulaire: Renault SAS, 92100 Boulogne Billancourt (FR)
(72) Inventeur: PETRA, Jean-Marc, F-91140 Villebon-sur-yvette (FR); SIMON, Marc, F-93130 Noisy-le-sec (FR); POURRIAS, Jean-Yves, F-92160 Antony (FR)
(86) Numéro de dépôt international: PCT/FR2006/050371
(87) Numéro de publication internationale: WO 2006/117489

(56) Documents cités:
- WO-A-01/28818
- FR-A- 2 445 783
- GB-A- 2 069 940
- US-A1- 2002 101 085

## Description

L'invention propose un agencement pour le montage d'une barre de chocs de véhicule automobile dans la partie avant du véhicule.

L'invention propose plus particulièrement un agencement pour le montage d'une barre de chocs dans la partie avant d'un véhicule automobile, au dessous du pare-chocs avant du véhicule,
dans lequel la barre de chocs consiste en un tube profilé qui est apte à se déformer globalement vers l'arrière lorsque la partie avant du véhicule est soumise à un choc, et qui comporte un tronçon central d'orientation principale transversale et deux tronçons opposés d'extrémité latérale dont chacun est en appui longitudinalement vers l'arrière contre un élément de structure de caisse du véhicule associé,
dans lequel la partie avant du véhicule comporte un élément d'habillage avant qui recouvre des faces avant respectives du pare-chocs et de la barre de chocs, et comporte un déflecteur aérodynamique inférieur qui est agencé au dessous de la barre de chocs, en arrière de l'élément d'habillage.

Une telle barre de chocs est, de manière conventionnelle, montée sous le pare-chocs du véhicule automobile, et elle limite les risques de blesser un piéton ayant été heurté par le véhicule, en absorbant une partie de l'énergie produite par le choc, et en empêchant que la jambe du piéton ne passe sous le véhicule.

Par ailleurs, la barre de chocs doit pouvoir être remplacée aisément après que le véhicule a subi un choc d'amplitude peu élevée et n'ayant pas provoqué de déformation de la structure de caisse du véhicule.

Pour déterminer le comportement de la barre de chocs lors d'un choc, et ainsi pour permettre de la dimensionner de manière optimale, on utilise une série d'essais, notamment par un choc appelé "choc Danner" pour lequel le véhicule vient en contact contre un mur, à une vitesse d'environ 15 Km/h.

Le document WO-A-01.28818 décrit un agencement d'une barre de chocs qui est agencée au dessous du pare-chocs avant du véhicule, et qui consiste en un élément profilé globalement cintré vers l'arrière de manière que ses tronçons d'extrémité latérale sont d'orientation longitudinale.

Cependant, selon ce document, les extrémités libres des tronçons d'extrémité latérale sont fixées à la structure de caisse du véhicule.

Ainsi, après un choc de faible amplitude, et lorsque l'ensemble de la partie avant du véhicule peut être remplacé, la fixation de la barre de chocs à la structure de caisse du véhicule rend le démontage de la partie avant difficile.

L'invention a pour but de proposer un agencement pour le montage de la barre de chocs dans la partie avant du véhicule, qui permet notamment de démonter aisément la barre de chocs, pour pouvoir remplacer aisément la totalité de la partie avant du véhicule lorsque celle-ci est endommagée.

Dans ce but, l'invention propose un agencement du type décrit précédemment, caractérisé en ce que la barre de chocs est fixée à la structure de caisse du véhicule par l'intermédiaire du déflecteur.

Selon d'autres caractéristiques de l'invention :
- la barre de chocs est en outre fixée à la structure de caisse du véhicule par l'intermédiaire de l'élément d'habillage avant ;
- le déflecteur comporte une plaque transversale globalement inclinée par rapport à l'horizontale qui s'étend à distance de la barre de chocs et dont au moins une extrémité de la plaque est fixée à l'élément de structure de caisse, et en ce que le déflecteur comporte un ensemble de protubérances qui font saillie vers le haut par rapport à la plaque transversale et qui relient la plaque transversale à la barre de chocs ;
- le sommet de chaque protubérance comporte des moyens de fixation du déflecteur sur la barre de chocs ;
- les protubérances sont réalisées venues de matière avec la plaque transversale ;
- l'élément de structure de caisse comporte des moyens de guidage en déformation de la barre de chocs, pour bloquer les tronçons d'extrémité latérale en déplacement selon la direction verticale lors de la déformation de la barre de chocs ;
- l'élément de structure de caisse porte un élément formant butée associé à chaque tronçon d'extrémité de la barre de chocs, et contre lequel le tronçon d'extrémité associé est en butée verticalement vers le haut et/ou vers le bas ;
- le déflecteur est réalisé de manière à limiter les déformations verticalement vers le bas et/ou vers le haut de la barre de chocs ;
- chaque tronçon d'extrémité de la barre de chocs est cintré en forme de U ouvert transversalement vers l'intérieur, dont l'aile transversale arrière est en appui longitudinal vers l'arrière contre l'élément de structure de caisse.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique de coté de l'avant d'un véhicule automobile montrant la position relative de la barre de chocs par rapport au pare-chocs ;
- la figure 2 est une vue en coupe et à plus grande échelle de la partie avant du véhicule, montrant le positionnement des composants de la partie avant les uns par rapport aux autres ; et
- la figure 3 est une représentation schématique en vue de dessus de la partie avant du véhicule, représentée à la figure 2, montrant la forme particulière de la barre de chocs.

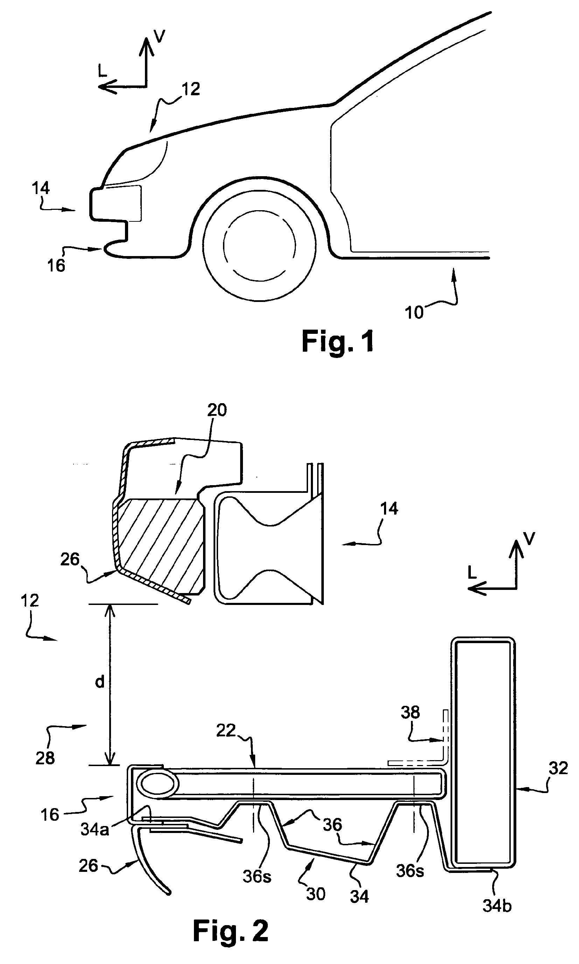

On a représenté aux figures 1 et 2 la partie avant 12 d'un véhicule automobile 10 qui comporte un pare-chocs 14, une barre de chocs 16 inférieure agencée au dessous du pare-chocs 14, et un élément d'habillage 26 qui recouvre les faces avant respectives du pare-chocs 14 et de la barre de chocs 16.

Comme on peut le voir à la figure 2, le pare-chocs 14 est de type conventionnel, il comporte un élément de support déformable 18, en forme de poutre transversale métallique, et un système d'absorption d'énergie 20, par exemple en mousse, qui permet d'absorber les chocs à faible vitesse.

La barre de chocs 16 est agencée verticalement au dessous du pare-chocs 14 du véhicule, à une distance "d" et l'élément d'habillage 26 comporte une ouverture 28 au niveau de l'espace entre le pare-chocs 14 et la barre de chocs 16, pour permettre la circulation d'un flux d'air en direction du radiateur du déplacement du véhicule.

Enfin, la partie avant 12 du véhicule 10 comporte un déflecteur inférieur 30 qui est agencé au dessous de la barre de chocs 16 et en arrière de l'élément d'habillage 26, et qui est conformé de manière à rediriger les flux d'air qui circulent dessous la partie avant 12 et qui sont produits lors du déplacement du véhicule 10.

La barre de chocs 16 consiste en un tube profilé d'orientation principale transversale, qui comporte un tronçon central transversal 22 qui est cintré en forme de "C" ouvert vers l'arrière du véhicule 10, et deux tronçons d'extrémité 24 opposés dont chacun est cintré en forme de U ouvert transversalement vers l'intérieur de la partie avant 12 du véhicule.

Chaque tronçon d'extrémité 24 comporte ainsi une aile avant 24a globalement transversale qui prolonge l'extrémité transversale associée du tronçon central 22 de la barre de chocs 16, et une aile arrière 24b globalement transversale.

La barre de chocs 16 est conformée pour se déformer globalement horizontalement lors d'un choc à l'avant du véhicule 10. A cet effet, l'aile arrière 24b de chaque tronçon d'extrémité 24 est en appui longitudinalement vers l'arrière contre un élément de structure de caisse 32 du véhicule 10.

Conformément à l'invention, la barre de chocs 16 est fixée à l'élément de structure de caisse 32 par l'intermédiaire de l'élément d'habillage 26.

Selon un mode de réalisation préféré de l'invention, la barre de chocs 16 est aussi fixée à l'élément de structure de caisse 32 du véhicule 10 par l'intermédiaire du déflecteur 30.

Un tel mode de fixation permet d'une part de limiter les vibrations entre la barre de chocs 16 et l'élément d'habillage 26, et il permet aussi de favoriser la déformation de la barre de chocs 16 en cas de chocs.

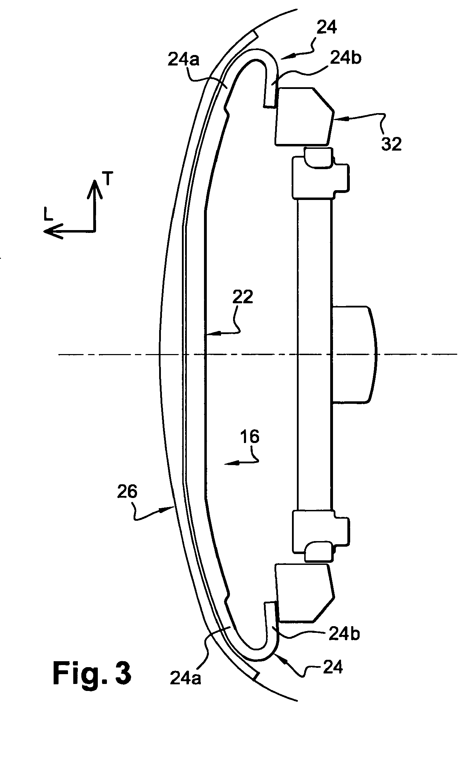

En effet, comme on peut le voir à la figure 3, et conformément à l'invention, les ailes arrière 24b de chaque tronçon d'extrémité 24 ne sont pas fixées à l'élément de structure de caisse 32 du véhicule, de ce fait, la barre de chocs 16 est libre de se déformer de sorte que les tronçons d'extrémité 24 sont aptes à s'écarter l'un par rapport à l'autre suivant la direction transversale.

Comme on peut le voir à la figure 2, le déflecteur 30 comporte une plaque plane 34 d'orientation principale transversale qui est située au dessous et à distance de la barre de chocs 16 et qui est inclinée par rapport à l'horizontale de manière que la hauteur de son bord d'extrémité avant 34a est supérieure à la hauteur de son bord d'extrémité arrière 34b.

Le déflecteur 30 est fixé à l'élément de structure de caisse 32 par l'intermédiaire du bord d'extrémité arrière 34b de la plaque 34, et il est fixé à l'élément d'habillage 26 par l'intermédiaire du bord d'extrémité avant 34a de la plaque 34.

Le déflecteur 30 comporte aussi un ensemble de protubérances 36 qui font saillie vers le haut par rapport à la plaque transversale 34, et qui relient a barre de chocs 16 au déflecteur 30.

Selon un mode de réalisation préféré du déflecteur 30, les protubérances 36 sont réalisées venues de matière avec la plaque 34, elles sont par exemple formées par emboutissage ou pliage de la plaque, de manière que le déflecteur 30 est réalisé en une seule pièce.

Pour la fixation de la barre de chocs 16 au déflecteur 30, le sommet 36s de chaque protubérance comporte des moyens de fixation à la barre de chocs 16, notamment par vissage ou soudage.

Lorsque la barre de chocs 16 se déforme, il est préférable de limiter ses déformations suivant la direction verticale pour éviter qu'un tronçon de la barre de chocs 16 ne vienne en contact avec un élément de la partie avant du véhicule.

C'est pourquoi, selon un autre mode de réalisation de l'invention, l'élément de structure de caisse 32 porte des moyens pour guider la barre de chocs 16 en déformation, de manière qu'elle se déforme globalement dans son plan principal horizontal.

Selon une variante de ce mode de réalisation de l'invention, les moyens de guidage comportent une équerre 38 qui est associée à chaque tronçon d'extrémité 24 et contre laquelle le tronçon d'extrémité 24 associé est en butée verticalement vers le haut. L'équerre 38 est par conséquent positionnée sur l'élément de structure de caisse 32 au dessus de l'aile arrière 24b du tronçon d'extrémité 24 associé.

Selon une autre variante non représentée de ce mode de réalisation de l'invention, l'élément de structure de caisse 32 comporte une deuxième équerre qui forme butée verticalement vers le bas de l'aile arrière 24b de chaque tronçon d'extrémité 24.

Selon encore une autre variante de ce mode de réalisation de l'invention, le déflecteur 30 est conformé de manière à limiter les déformations verticalement de la barre de chocs 16.

Pour cela, comme on peut le voir à la figure 2, les protubérances 36 sont agencées par rapport à la barre de manière qu'elles sont réparties le long de la barre de chocs 16.

Un tel montage de la barre de chocs 16 par l'intermédiaire du déflecteur 30, et le cas échéant par l'intermédiaire de l'élément d'habillage 26, permet de n'avoir aucun élément de fixation de la barre de chocs 16 avec l'élément de structure de caisse 32. Ainsi, le démontage de la partie avant du véhicule 10 est plus aisé car il n'y a pas à démonter la barre de chocs 16 d'avec l'élément de structure de caisse 32.

De plus, le montage de la barre de choc 16 sur le déflecteur 30 permet de réaliser une partie avant de véhicule comportant un système d'absorption de chocs ayant une bonne compressibilité et qui génère des efforts relativement faibles sur la structure de caisse 32 du véhicule 10.

Cela permet de réduire les coûts de réparation du véhicule en cas de chocs car il n'y a à prévoir aucune intervention sur la structure de caisse 32 du véhicule 10.

## Revendications

1. Agencement pour le montage d'une barre de chocs (16) dans la partie avant (12) d'un véhicule (10) automobile, au dessous du pare-chocs (14) avant du véhicule (10),
dans lequel la barre de chocs (16) consiste en un tube profilé qui est apte à se déformer globalement vers l'arrière lorsque la partie avant (12) du véhicule (10) est soumise à un choc, et qui comporte un tronçon central (22) d'orientation principale transversale et deux tronçons (24) opposés d'extrémité latérale dont chacun est en appui longitudinalement vers l'arrière contre un élément de structure de caisse (32) du véhicule (10) associé,
dans lequel la partie avant (12) du véhicule (10) comporte un élément d'habillage avant (26) qui recouvre des faces avant respectives du pare-chocs (14) et de la barre de chocs (16), et comporte un déflecteur (30) aérodynamique inférieur qui est agencé au dessous de la barre de chocs (16), en arrière de l'élément d'habillage (26),
**caractérisé en ce que** la barre de chocs (16) est fixée à la structure de caisse du véhicule (10) par l'intermédiaire du déflecteur (30).

2. Agencement selon la revendication précédente, **caractérisé en ce que** la barre de chocs (16) est en outre fixée à la structure de caisse (32) du véhicule (10) par l'intermédiaire de l'élément d'habillage avant (26).

3. Agencement selon l'une quelconque des revendications précédentes, **caractérisé en ce que** le déflecteur (30) comporte une plaque transversale (34) globalement inclinée par rapport à l'horizontale qui s'étend à distance de la barre de chocs (16) et dont au moins une extrémité (34b) de la plaque est fixée à l'élément de structure de caisse (32), et **en ce que** le déflecteur (30) comporte un ensemble de protubérances (36) qui font saillie vers le haut par rapport à la plaque transversale (34) et qui relient la plaque transversale (34) à la barre de chocs (16).

4. Agencement selon la revendication précédente, **caractérisé en ce que** le sommet de chaque protubérance (36) comporte des moyens de fixation du déflecteur (30) sur la barre de chocs (16).

5. Agencement selon l'une quelconque des revendications 3 ou 4, **caractérisé en ce que** les protubérances (36) sont réalisées venues de matière avec la plaque transversale (34).

6. Agencement selon l'une quelconque des revendications précédentes, **caractérisé en ce que** l'élément de structure de caisse (32) comporte des moyens (38) de guidage en déformation de la barre de chocs (16), pour bloquer les tronçons d'extrémité latérale (24) en déplacement selon la direction verticale lors de la déformation de la barre de chocs (16).

7. Agencement selon la revendication précédente, **caractérisé en ce que** l'élément de structure de caisse (32) porte un élément (38) formant butée associé à chaque tronçon d'extrémité (24) de la barre de chocs (16), et contre lequel le tronçon d'extrémité associé (24) est en butée verticalement vers le haut et/ou vers le bas.

8. Agencement selon la revendication 6 ou 7, **caractérisé en ce que** le déflecteur (30) est réalisé de manière à limiter les déformations verticalement vers le bas et/ou vers le haut de la barre de chocs (16).

9. Agencement selon l'une quelconque des revendications précédentes, **caractérisé en ce que** chaque tronçon d'extrémité (24) de la barre de chocs (16) est cintré en forme de U ouvert transversalement vers l'intérieur, dont l'aile transversale arrière (24b) est en appui longitudinal vers l'arrière contre l'élément de structure de caisse (32).

## Claims

1. Arrangement for mounting a bumper bar (16) in the front part (12) of a motor vehicle (10) below the front bumper (14) of the vehicle (10),
in which the bumper bar (16) consists of a profiled tube which is able to deform generally rearwards when the front part (12) of the vehicle (10) experiences an impact, and which comprises a central section (22) directed mainly transversely and two opposite lateral end sections (24) each of which bears longitudinally rearwards against a body structure element (32) of the associated vehicle (10),
in which the front part (12) of the vehicle (10) comprises a front trim element (26) which covers respective front faces of the bumper (14) and of the bumper bar (16) and comprises a lower aerodynamic deflector (30) which is positioned below the bumper bar (16) behind the trim element (26),
**characterized in that** the bumper bar (16) is attached to the body structure of the vehicle (10) via the deflector (30).

2. Arrangement according to the preceding claim, **characterized in that** the bumper bar (16) is also attached to the body structure (32) of the vehicle (10) via the front trim element (26).

3. Arrangement according to either one of the preceding claims, **characterized in that** the deflector (30) comprises a transverse panel (34) generally inclined with respect to the horizontal and extending some distance from the bumper bar (16) with at least one end (34b) of the panel attached to the body structure element (32), and **in that** the deflector (30) comprises a collection of protrusions (36) which project upwards with respect to the transverse panel (34) and which connect the transverse panel (34) to the bumper bar (16).

4. Arrangement according to the preceding claim, **characterized in that** the top of each protrusion (36) comprises means of attaching the deflector (30) to the bumper bar (16).

5. Arrangement according to either one of Claims 3 or 4, **characterized in that** the protrusions (36) are produced as an integral part of the transverse panel (34).

6. Arrangement according to any one of the preceding claims, **characterized in that** the body structure element (32) comprises means (38) for guiding the deformation of the bumper bar (16) in order to prevent the lateral end sections (24) from moving vertically as the bumper bar (16) deforms.

7. Arrangement according to the preceding claim, **characterized in that** the body structure element (32) bears a stop-forming element (38) associated with each end section (24) of the bumper bar (16) and against which the associated end section (24) butts vertically upwards and/or downwards.

8. Arrangement according to Claim 6 or 7, **characterized in that** the deflector (30) is produced in such a way as to limit downwards and/or upwards vertical deformations of the bumper bar (16).

9. Arrangement according to any one of the preceding claims, **characterized in that** each end section (24) of the bumper bar (16) is bent into a U-shape open transversely towards the inside, the rear transverse leg (24b) of which bears longitudinally rearwards against the body structure element (32).

## Patentansprüche

1. Anordnung für die Montage einer Stoßstange (16) im vorderen Teil (12) eines Kraftfahrzeugs (10) unter dem vorderen Stoßfänger (14) des Fahrzeugs (10),
wobei die Stoßstange (16) aus einem Profilrohr besteht, das sich als Ganzes nach hinten verformen kann, wenn der vordere Teil (12) des Fahrzeugs (10) einem Stoß unterworfen wird, und das ein mittleres Teilstück (22) mit einer transversalen Hauptorientierung sowie zwei gegenüberliegende seitliche Endteilstücke (24), wovon sich jedes longitudinal nach hinten an einem Aufbaustrukturelement (32) des zugeordneten Fahrzeugs (10) abstützt, enthält,
wobei der vordere Teil (12) des Fahrzeugs (10) ein vorderes Verkleidungselement (26) aufweist, das vordere Flächen des Stoßfängers (14) bzw. der Stoßstange (16) abdeckt und eine untere aerodynamische Ablenkeinrichtung (30) aufweist, die unter der Stoßstange (16) hinter dem Verkleidungselement (26) angeordnet ist,
**dadurch gekennzeichnet, dass** die Stoßstange (16) an der Aufbaustruktur des Fahrzeugs (10) über die Ablenkeinrichtung (30) befestigt ist.

2. Anordnung nach dem vorhergehenden Anspruch, **dadurch gekennzeichnet, dass** die Stoßstange (16) außerdem über das vordere Verkleidungselement (26) mit der Aufbaustruktur (32) des Fahrzeugs (10) verbunden ist.

3. Anordnung nach einem der vorhergehenden Ansprüche, **dadurch gekennzeichnet, dass** die Ablenkeinrichtung (30) eine transversale Platte (34) aufweist, die als Ganzes in Bezug auf die Horizontale geneigt ist und sich in einem Abstand von der Stoßstange (16) erstreckt und wovon wenigstens ein Ende (34b) an dem Aufbaustrukturelement (32) befestigt ist, und dass die Ablenkeinrichtung (30) eine Gesamtheit von Ausbauchungen (36) enthält, die in Bezug auf die transversale Platte (34) nach oben vorstehen und die transversale Platte (34) mit der Stoßstange (16) verbinden.

4. Anordnung nach dem vorhergehenden Anspruch, **dadurch gekennzeichnet, dass** die Spitze jeder Ausbauchung (36) Mittel zum Befestigen der Ablenkeinrichtung (30) an der Stoßstange (16) enthält.

5. Anordnung nach einem der Ansprüche 3 oder 4, **dadurch gekennzeichnet, dass** die Ausbauchungen (36) einteilig mit der transversalen Platte (34) verwirklicht sind.

6. Anordnung nach einem der vorhergehenden Ansprüche, **dadurch gekennzeichnet, dass** das Aufbaustrukturelement (32) Führungsmittel (38) bei der Verformung der Stoßstange (16) enthält, um die seitlichen Endteilstücke (24) bei der Verformung der Stoßstange (16) bei ihrer Verlagerung in der vertikalen Richtung zu blockieren.

7. Anordnung nach dem vorhergehenden Anspruch, **dadurch gekennzeichnet, dass** das Aufbaustrukturelement (32) ein Element (38) trägt, das einen jedem Endteilstück (24) der Stoßstange (16) zugeordneten Anschlag bildet und gegen das das zugeordnete Endteilstück (24) in Aufwärts- und/oder Abwärtsrichtung vertikal anschlägt.

8. Anordnung nach Anspruch 6 oder 7, **dadurch gekennzeichnet, dass** die Ablenkeinrichtung (30) in der Weise verwirklicht ist, dass die vertikalen Verformungen der Stoßstange (16) nach unten und/oder nach oben begrenzt werden.

9. Anordnung nach einem der vorhergehenden Ansprüche, **dadurch gekennzeichnet, dass** jedes Endteilstück (24) der Stoßstange (16) in Form eines transversal nach innen geöffneten U gebogen ist, wovon sich ein hinterer transversaler Schenkel (24b) longitudinal in Rückwärtsrichtung an dem Aufbaustrukturelement (32) abstützt.
